# EUROPEAN PATENT APPLICATION

(11) **EP 4 790 545 A1**
(43) Date of publication of application: **12.08.2026**
(21) Application number: 25178628.1
(22) Date of filing: 23.05.2025
(51) Int. Cl.: G06F 8/20, G06F 8/35, G06F 16/36

(54) **ONTOLOGY BUILD AUTOMATION TOOL**

(30) Priority: 07.02.2025 US 202563755493 P; 25.04.2025 US 202519189816
(71) Applicant: Palantir Technologies Inc., Aventura, Florida 33180 (US)
(72) Inventor: ANDERSON, Eric, Denver, 80202 (US); CARTER, Landon, Denver, 80202 (US); PARSON, Alexander, Denver, 80202 (US); LEUNG, Timothy, Denver, 80202 (US); DEITCH, Richard, Denver, 80202 (US); YU, Stephanie, Denver, 80202 (US); JUELICH, Jakob, Denver, 80202 (US)
(74) Representative: Jolliffe, Jack Louis

(57) **Abstract**

Computer-implemented systems and methods are disclosed for transitioning interactive workflow graphical user interface generation to local software development environments. A computer-implemented method may include receiving, via interactive user interface and from a user, definitions of one or more data object types including respective one or more properties. A computer-implemented method may execute a build process on the definitions to generate: an ontology definition file; and an ontology software development kit ("SDK"). A computer-implemented method may automatically communicate the ontology definition file to a backend server that may be usable by the backend server to generate an ontology implementation that may be usable in execution of software applications that operate on data objects. A computer-implemented method may include automatically implementing the ontology SDK in the software development environment, wherein the ontology SDK is configured to provide functionality to the software development environment for developing software applications that operate on data objects.

## Description

### CROSS-REFERENCE TO RELATED APPLICATIONS

This application claims benefit of U.S. Provisional Patent Application No. 63/755493, filed February 7, 2025, and titled "ONTOLOGY BUILD AUTOMATION TOOL." The entire disclosure of each of the above items is hereby made part of this specification as if set forth fully herein and incorporated by reference for all purposes, for all that it contains.

Any and all applications for which a foreign or domestic priority claim is identified in the Application Data Sheet as filed with the present application are hereby incorporated by reference under 37 CFR 1.57 for all purposes and for all that they contain.

### TECHNICAL FIELD

The present disclosure relates to systems and techniques for data integration, analysis, and visualization. More specifically, implementations of the present disclosure relate to computerized systems and techniques for using coding tools to develop an object model and/or ontology to store process information and generate interactive visualizations.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more software-based workflows or applications. For example, a software application can facilitate systematic organization and automation of tasks and processes on computing systems, and may streamline operations and enhance efficiency in the execution of tasks and processes. Once created or deployed, the software application may be operated, and/or updated to accomplish certain user objectives.

### SUMMARY

The systems, methods, and devices described herein each have several aspects, no single one of which is solely responsible for its desirable attributes. Without limiting the scope of this disclosure, several non-limiting features will now be described briefly.

Software-based workflows or applications can facilitate systematic organization and automation of tasks and processes on computing systems, and may streamline operations and enhance efficiency in the execution of tasks and processes. Once created or deployed, a workflow or a software application may be operated, and/or updated to accomplish certain user objectives. However, development of and/or updates for the software application may be developed on a server-side interactive user interface based on a particular data set. It can be inefficient to develop individual software applications for each particular data set when a single object model and/or ontology would be applicable to each. For example, currently a server-side interactive user interface can be used to develop the ontology for a software application by defining relationships (e.g., links, data dependencies, lineage, or provenance) between components (e.g., data objects, actions, functions, logics) based on a data set that is stored on the server. Accordingly, there may be no efficient way for a user to develop a generic ontology applicable to components associated with different data sets or intuitively modify an existing ontology to be applicable.

The present disclosure describes systems and methods (generally collectively referred to herein as a "workflow transition system" or simply a "system") that can advantageously overcome various of the technical challenges mentioned above, among other technical challenges. More specifically, various implementations of the systems and methods of the present disclosure can advantageously enable additional functionality and automation in local software development environments, whereas functionality may have previously required interfacing with server-side software development environments. Advantageously, the system can enable more customizable functions in the local software development environment for defining generic ontologies, such as by building ontology software development kits ("SDKs") that can provide, within local software development environments, connections to a backend server with a corresponding ontology definition file for current and future use. The system can advantageously receive definitions of components and relationships via code input to local software development environments. The system can advantageously allow data to be maintained off of the backend server while defining components and building the ontology SDK and ontology definition file. The system advantageously allows for generic ontology that can be used for other data sets, as the ontology definition files and ontology SDKs can be re-used by the user or other parties to develop the other data sets into software applications. Accordingly, the ontology definition files and ontology SDKs, potentially along with a testing software application based on the defined ontology, can be uploaded to the backend server for others to access without the risk of providing access to confidential or real data.

Additionally, various implementations of the present disclosure are inextricably tied to computer technology. In particular, various implementations rely on detection of user inputs via graphical user interfaces, calculation of updates to display electronic data based on those user inputs, automatic processing of related electronic data, application of language models and/or other artificial intelligence, and provision of the updates to display information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various implementations cannot reasonably be performed by humans alone, without the computer technology upon which they are implemented. Further, the implementation of the various implementations of the present disclosure via computer technology enables many of the advantages described herein.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that the design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interface via the inputs described herein may provide an optimized display of, and interaction with, models and model-related data, and may enable a user to more quickly and accurately access, navigate, assess, and digest the model-related data than previous systems.

Thus, various implementations of the present disclosure can provide improvements to various technologies and technological fields, and practical applications of various technological features and advancements. For example, as described above, existing software application management and integration technology is limited in various ways, and various implementations of the disclosure provide significant technical improvements over such technology. Additionally, various implementations of the present disclosure are inextricably tied to computer technology. In particular, various implementations rely on the operation of technical computer systems and electronic data stores, automatic processing of electronic data, and the like. Such features and others (e.g., automatically generating machine learning models to fulfill specific user requests, processing and analysis of large amounts of electronic data, management of data migrations and integrations, and/or the like) are intimately tied to, and enabled by, computer technology, and would not exist except for computer technology. Further, the implementation of the various implementations of the present disclosure via computer technology enables many of the advantages described herein, including more efficient management of various types of electronic data (including computer-based models).

Various combinations of the above and below recited features, embodiments, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums or devices comprising, configured to store, and/or storing program instructions, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums or devices, and/or one or more computer-readable storage mediums or devices, are disclosed, wherein the computer-readable storage mediums comprise, are configured to store, and/or store program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1 is a block diagram illustrating an example workflow transition system in an example computing environment, according to various implementations of the present disclosure;
FIG. 2 shows an example object-centric conceptual data model of an ontology developed with the workflow transition system, according to various embodiments of the present disclosure;
FIGS. 3A and 3B are flowcharts illustrating example routines for defining actions and data object types associated with an ontology, according to various implementations of the present disclosure;
FIGS. 4A-4D show example interactive graphical user interfaces in a local software development environment associated with the workflow transition system, according to various implementations of the present disclosure;
FIG. 5 shows an example interactive graphical user interface in a server-side software development environment associated with the workflow transition system, according to various implementations of the present disclosure; and
FIG. 6 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

### Overview

As mentioned above, software-based workflows or applications can facilitate systematic organization and automation of tasks and processes on computing systems, and may streamline operations and enhance efficiency in the execution of tasks and processes. Once created or deployed, a workflow or a software application may be operated, and/or updated to accomplish certain user objectives. However, development of and/or updates for the software application may be developed on a server-side interactive user interface based on a particular data set.

For example, currently multiple server-side interactive user interface can be used to develop the ontology for a software application by defining components (e.g., data objects, actions, functions, logics) and relationships (e.g., links, data dependencies, lineage, or provenance) between components based on a particular data set. The data set may need to be integrated and adjusted before it can be indexed to develop an ontology SDK, which may be built on a separate user interface. Whether to fix issues with a generated ontology SDK or change the indexed ontology data model for experimental purposes, the different interactive user interfaces may need to be repetitively accessed and slow down execution of developing a software application. It can thus be inefficient and unnecessarily repetitive to develop software applications for a single data set, and even more so to develop multiple software applications for each particular data set. In some instances, a single object model and/or ontology could be applicable to multiple data sets, such as when each data set could be associated with the same components and/or relationships, but currently ontologies are defined accordingly to a particular data set. This may either require developers to define specific ontologies for each data set or attempt to reverse engineer and retrofit the definitions in an ontology for a different data set. However, these data sets, which often contain organizational-specific or confidential information, are typically stored in secure data stores but, currently, would need to be uploaded to the backend server before the ontology could even be developed using a server-side interactive user interface. As such, allowing access to an ontology for retrofitting could inadvertently allow access to confidential data for unauthorized personnel. Moreover, any adjustments to the ontology data model, even for experimental purposes, may require changing a real ontology that could be important to an organization. Accordingly, there may be no efficient way for a user to develop a generic ontology applicable to components associated with different data sets or intuitively modify an existing ontology to be applicable.

As also noted above, the present disclosure describes systems and methods (generally collectively referred to herein as a "workflow transition system" or simply a "system") that can advantageously overcome various of the technical challenges mentioned above, among other technical challenges. More specifically, various implementations of the systems and methods of the present disclosure can advantageously enable additional functionality and automation in local software development environments without needing to index a data set, whereas functionality may have previously required interfacing with a particular data set on one or more server-side software development environments.

Advantageously, the system can enable more customizable functions in the local software development environment. For example, the system of the present disclosure can build ontology software development kits ("SDKs") that can provide, within local software development environments, connections to a backend server with a corresponding ontology definition file. The system can advantageously receive definitions of components and relationships via code input to local software development environments without needing to index a particular data set. The system can then automatically execute a build process based on the definitions to generate an ontology SDK and an ontology definition file for current and future use. The ontology definition file can be automatically communicated to the backend server. The ontology SDK can be used on the client-side, local software development environment. The system can advantageously use the combination of the ontology SDK and the ontology definition file to verify that the object definitions are compatible with building a software application while, for example, allowing the software application to be developed in the local software development environment.

The system can advantageously allow data to be maintained off of the backend server while defining components and building the ontology SDK and ontology definition file. Advantageously, the system allows a user to be able to wait until they are ready to build their ontology software application to upload their data, upon which the data can be organized according to the ontology developed according to the ontology definition file and ontology SDK and visualized in an interactive user interface. Because the developed ontology is not data set-specific, the system advantageously allows for a generic ontology that can be used for other data sets, as the ontology definition files and ontology SDKs can be re-used by the user or other parties to develop the other data sets into software applications. The ontology definition files and ontology SDKs, potentially along with a testing software application based on the defined ontology, can be uploaded to the backend server for others to access without the risk of providing access to confidential or real data.

For example, previous functionality could be data-driven, such as building an ontology by organizing data from a particular data set regarding past flights into components such as object types, such as pilots, and properties of the object, such as flight numbers, flight times, number of passengers, and/or the like, but this system can develop an ontology without a data set by defining the object types and corresponding properties, which users can apply to their relevant data sets to be organized according to those definitions. These generic ontologies can be used with different data sets to develop software applications that could provide, for example, interactive visualization (e.g., generation of graphical representations including nodes and edges to represent data objects, actions, and/or software applications), data analysis, data processing, and/or machine learning techniques to allow users to efficiently manage and/or understand relationships between components (e.g., data objects, actions, functions, logics, and/or the like).

### Example Features Related to Interactive Node Graph Generation

The system may generate tools, such as ontology SDKs, ontology definition files, and/or the like, that can be used to generate interactive node graphs or graphical representations comprising nodes and edges to provide interactive visualizations of data dependencies and relationships according to an ontology between components of a software application or a software-based workflow in compact and dynamic manners. For example, one or more data stores can store a configuration or ontology implementation associated with an ontology SDK of a software application. The configuration of the software application may include information used for configuring the software application, such as widgets (e.g., a button, a tab with which users can interact), code (e.g., Python code), variables, and/or functions used to configure the software application. In some implementations, the configuration of the software application can be stored using a JavaScript Object Notation ("JSON") format to define or describe the information (e.g., widgets, code, variables, and/or functions) and relationships (e.g., dependencies, lineage, or provenance) among the information used for configuring the software application. The configuration may be accessed or parsed to determine or identify actions (e.g., send an email, unsend an email, edit a document, or the like), data object types (e.g., an email data object type, a document data object type, or the like), and/or the like. that are associated with the software application. The widgets, the code, the variables, and/or the functions along with relationships of the information may be extracted for configuring the software application. Based on the extraction and/or the relationships, at least the widgets, the code, the variables, and/or the functions may be parsed or traversed to determine that one or more actions and one or more data object types are referenced or used by the widgets, the code, the variables, and/or the functions, and the one or more actions and the one or more data object types are associated with the software application. By parsing and/or traversing the information included in the configuration, the lineage or provenance among the one or more actions, the one or more data object types, and the software application may be determined.

The system may generate files for the configuration that can be used as an ontology to parse the widgets, the code, the variables, or the functions that identify the one or more actions, the one or more data object types, and the lineage among the one or more actions, the one or more data object types, and the software application. For example, the code of the software application may refer to an identification number of a data object type without further identifying the data object type. The system may be used to identify additional information (e.g., properties of the data object type, links between the data object type and other data object types) about the data object type and include the additional information in the ontology as definitions that can be used to generate an interactive node graph. The defined ontology may identify relationships, properties, and/or links between data object types to provide the overall structure of the software application to be generated.

Based at least on the one or more components and one or more relationships defined in the ontology, an interactive graphical representation can be generated using the ontology SDK and/or the ontology template package when applied to a particular data set. The interactive graphical representation may include nodes and edges, where nodes represent the one or more data objects sourced from the data set that are of the data object types defined in the ontology SDK. Edges may represent the relationships and dependencies between the nodes to indicate lineage or provenance among the one or more data objects of the data object types determined based on the configuration. For example, an edge may be directed from a node representing a data object (e.g., of a team member data object type) to another node representing a software application data object (e.g., of a data object type for email review) to indicate that the software application reads a data object of the data object type. As another example, an edge may be directed from a node representing an action (e.g., send email) to another node representing a data object (e.g., of an email data object type) to indicate that the action edits a data object of the data object type.

### Example Features Related to User Interfaces

The system may further allow user to interact with the system through a user interface (e.g., a graphical user interface ("GUI") or other types of user interfaces), and/or receive user operations on an interactive graphical representation that is presented through a user interface. As noted above, the system may use one or more user interfaces for a local software development environment to display a programming session to enable a developer to compose and execute lines of software code and view associated output results and build a software application quickly and interactively. In some instances, these user interfaces can be on a client device or on a server associated with a local software development environment. The user interface may be configured to support a wide variety of programming languages, including but not limited to TypeScript, Scala, Python, HTML, JavaScript, Ruby, and so on.

As noted above, the system may use one or more user interfaces, such as for a server-side software development environment, to generate the interactive graphical representation associated with a software application, and the software application itself using a data set. In some instances, these user interfaces can be on a client device and/or in a software development environment associated with a backend server. The user interface may allow users to make selections to generate a software application based on an uploaded data set associated with the ontology. Furthermore, the system may use one or more user interfaces to present the interactive graphical representation associated with a software application, and the software application itself. The user interface may allow users to make selections on nodes, edges, and user interface elements within the interactive graphical representation. For example, selecting a node representing a data object type may trigger the display of additional nodes and edges, providing further details about the data object type through the user interface.

The one or more user interfaces may be displayed, for example, via a web browser (e.g., as a web page), a mobile application, or a standalone application. The user interfaces may also be displayed on any suitable computer device, such as a cell/smart phone, tablet, wearable computing device, portable/mobile computing device, desktop, laptop, or personal computer, and are not limited to the samples as described herein. The user interfaces and functionality may be provided by software executing on the individual's computing device with a back end server located remotely that is in communication with the computing device via one or more networks, and/or some combination of software executing on the computing device and a system associated with the backend server.

### Further Example Information Related to Various Implementations

To facilitate an understanding of the systems and methods discussed herein, several terms are described below and herein. These terms, as well as other terms used herein, should be construed to include the provided descriptions, the ordinary and customary meanings of the terms, and/or any other implied meaning for the respective terms, wherein such construction is consistent with context of the term. Thus, the descriptions below and herein do not limit the meaning of these terms, but only provide example descriptions.

The term "model," as used in the present disclosure, can include any computer-based models of any type and of any level of complexity, such as any type of relational, sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like.

A User Operation (or "User Input") can be any operations performed by one or more users to user interface(s) and/or other user input devices associated with a system (e.g., the data extraction system). User operation can include a request for task(s) to be performed, such as by using a machine learning model and/or an LLM, in whole or in part. User operation can include a request for data, such as data accessed and/or processed by one or more services. User operation can include one or more queries, one or more questions, one or more requests, or the like. User operation may include one or more natural language instructions for some data analysis (e.g., prediction, estimation, classification, or the like) to be performed. User operations can include, for example, select, drag, move, group, or the like, one or more interactive graphical representations for updating an ontology.

A Software Application (or "Application") can be any computer-executable program or group of programs, scripts, routines, and/or the like, designed to perform specific tasks for users. The tasks performed can range from productivity functions, such as document processing, email management, and spreadsheet management, to entertainment, such as gaming and media playback, or other types of tasks. A software application may be built to run on various platforms, including desktop computers, mobile devices, servers, web browsers and/or the like, and they can interact with the underlying operating system to utilize hardware resources and provide a user interface for interaction. A software application may be developed using programming languages and frameworks that are suited to the target platform. A software application can be used to perform various actions (e.g., send or unsend an email, edit or update a document, or the like) on various data objects of data object types (e.g., a document data object, a log data object, an email data object, or the like).

Ontology can include stored information that provides a data model for storage of data in one or more databases and/or other data stores. For example, the stored data may include definitions for data object types and respective associated properties. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types. An ontology may be used by an organization to model a view of, or provide a template for, what objects exist in the world, what their properties are, and how they are related to each other.

A Data Object (or "Object" or "Data Object Instance") is a data container for information representing a specific thing in the world that has a number of definable properties. For example, a data object can represent a machine learning model. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A Data Store is any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A Database or Data Set is any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example.

### Example System and Related Computing Environment

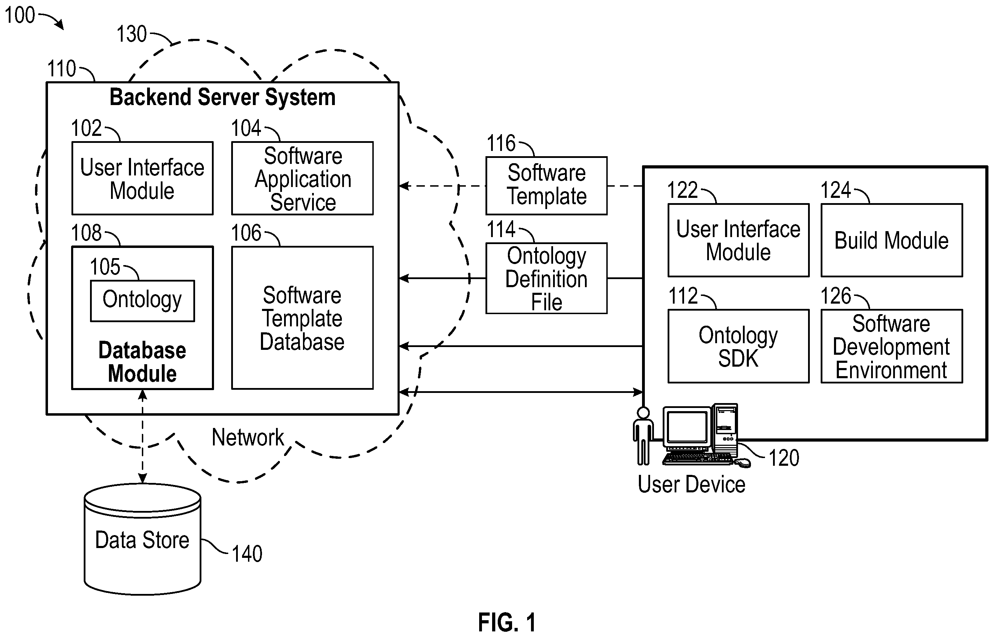

FIG. 1 illustrates an example computing environment 100 of an example workflow transition system of the present disclosure. The computing environment 100 and/or the workflow transition system can include a user device 120 (also referred to herein as a user computing device), a backend server system 110, and a network 130. In some embodiments, the workflow transition system can include a data store 140. In the example of FIG. 1, the backend server system 110 and user device 120 may comprise various modules, including user interface modules (102 and 122), a software application service 104, a database module 108 that includes an ontology 105, a build module 124, and a software development environment 126. In other embodiments, the backend server system 110 and user device 120 may include fewer or additional components. In the example of FIG. 1, the user device 120 may generate ontology files, which can include an ontology SDK 112 and an ontology definition file 114. In some instances, the user device 120 may further generate software application template package, or a software template 116, as part of the ontology files. In the example of FIG. 1, these ontology files can be uploaded to the backend server system and may be stored in the software template database 106.

In the example of FIG. 1, the various devices are in communication via a network 130, which may include any combination of networks, such as one or more local area network (LAN), personal area network (PAN), wide area network (WAN), Global System for Mobile Communications (GSM) network, a Code Division Multiple Access (CDMA) network, a Long Term Evolution (LTE) network, the Internet, and/or any other communication network. The network 130 can use protocols and components for communicating via the Internet or any of the other aforementioned types of networks. For example, the protocols used by the network 130 may include Hypertext Transfer Protocol (HTTP), HTTP Secure (HTTPS), Message Queue Telemetry Transport (MQTT), Constrained Application Protocol (CoAP), and the like.

In various implementations, modules of the illustrated components, such as user interface modules (102 and 122), a software application service 104, a database module 108 that includes an ontology 105, a build module 124, and a software development environment 126 of the backend server system 110 and user device 120, may communicate via an internal bus and/or via the network 130. Additionally, the backend server system 110 and user device 120 may communicate to upload the ontology files via the network 130 in the course of fulfilling an objective and/or a user input. In some instances, the backend server system 110 may communicate with the data store 140 via the network 130 in the course of fulfilling an objective and/or a user input.

The software development environment 126 can be configured to enable a developer to compose and execute lines of software code and view associated output results via a programming session quickly and interactively. The software development environment 126 may be associated with a local server on the user device 120 or accessible by the user device 120. The software development environment 126 can be used to compose software code that defines types for components (e.g., data objects, actions, functions, logics) and relationships (e.g., links, data dependencies, lineage, or provenance) between components. The definition types may be formatted to correspond to data structures or data sets that store the components, such as the data objects. These data structures can be stored in the data store 140, which are transferred over the network 130 to the database module 108 when developing a software application. These software codes can be formatted as code, variables, and/or functions defining the components and/or relationships according a domain-specific language, such as but not limited to Typescript, Java, Go, Python, NPM, and/or the like. The software development environment 126 may be enabled for the workflow transition system using a plug-in associated with the backend server that can integrate the software development environment 126 with the backend server system 110. In some instances, the plug-in can include a Typescript library or other domain-specific language library associated with software code syntax that composed and executed accordingly can provide functionality to the software development environment 126 to develop software applications that operate on components according to the definition types composed. The plug-in can be based on an existing ontology implementation or ontology SDK 112, and in some instances, can be updated as more ontology files are generated.

For example, the software development environment 126 can be used to receive definition types from the user that create a data object type and respective properties of the data object type as software code. In some instances, the software development environment 126 may also be used to receive updates to define properties of a respective data object type as software code. In some instances, the software development environment 126 can be used to receive definition types from a user of an object link type and respective indications of the associated data object types, such as being based on the properties of the data object types, as software code. These object link types may be between properties of the same object data type, between the same or different properties of different object data types, and/or the like. These object link types can also be considered one-to-one, one-to-many, many-to-one, many-to-many, and/or the like. In such instances, receiving definition types of an object link type can implicitly create the one or more associated data object type or define a property of the associated data object type even if the data object type or associated properties have not been previously defined. In such instances, the software development environment 126 may also be used to receive updates to define or change the object link type or an aspect of the object link type as software code. For example, the software code can indicate that the object link type is changed from one-to-one to a one-to-many.

In some instances, the software development environment 126 can be used to receive definition types from a user of an action type with declarations or queries to the properties of an associated data object type or object link type as software code. These declarations can include a condition related to a data object of the associated data object type or an object link of the associated object link type that when met, causes an effect to the data object or object link, such as adjusting an associated property or indication in the data object or object link. For example, declarative action when implemented as an ontology implementation and indexing a data set on flight information may seek a condition for the maintenance property of a flight number object and if met, adjust the delay property of the flight number object from +1 hour to +3 hour. The queries can be actions that are coded into a graphical representation of a data set that may continually update aspects of a software application generated using an ontology that includes the query. Accordingly, the query can provide for a continuous condition and effect even after a data set has been indexed with the ontology implementation.

In some embodiments, the software development environment 126 can also be used to receive definition types from a user for types for pseudo-reusable property names for components or relationships or properties and/or indications of, interface types, user permission types, functions types, logic types, data dependency types, lineage types, and/or provenance types as software code. In some embodiments, the software development environment 126 can be used to receive definition types from a user that are write-only as software code, such that the definition type cannot be updated or adjusted.

The domain specific language, or development language, of the local software development environment 126 used for the software code, such as but not limited to Typescript, can include a type safe mechanism based on a library of functions and/or rules to confirm that the format of the software code conforms with object type rules from the library of functions and/or rules, and is processable by the build module 124 to generate ontology files usable to develop a software application. These object type rules can be based on existing libraries associated with the domain specific language, from an existing ontology SDK and associated files, and/or integrated with plug-in for the workflow transition system. In some instances, the software development environment 126 can analyze the syntax of software code and verify whether variables of the software code are re-used in different ways, which can be accomplished either when received by the software development environment 126 or during the build process by the build module 124. For each of these definition types, the software development environment 126 can receive software code associated with an application programming interface ("API") that can indicate how to retrieve or submit data associated with the definition type to/from a data processing service through appropriate API calls. The software development environment 126 may be interacted with by the user through a user interface module 122.

The build module 124 can be configured to execute a build process on the definition types, such as the definitions of the data object types, object link types, and/or action types, to generate an ontology SDK 112 and ontology definition file 114. During the build process, the build module 124 may generate scripts and/or plug-ins that process the definition types. In some instances, the build module 124 parses the definitions of the definition types and generates an in-memory model from the parsed definitions. During such, each software code for each definition type is run and the build module 124 internally builds an in-memory model according to each definition type run. For example, when the software code for a first data object type is run by the build module 124, a first marker is generated that represents a data object of the first data object type, when the software code for a second data object type is run, a second marker is generated that represents a data object of the second data object type, and when the software code is run for an object link type associated with a relationship between the first data object type and the second data object type, then both the first marker and the second marker are called and updated to connect the markers according to the defined relationship. In some instances, if only the software code is run for an object link type associated with a relationship between the first data object type and the second data object type, then the build module 124 may generate both the first marker and the second marker are called and to connect the markers according to the defined relationship. Thus, disparate software codes can be used together to form an in-memory model even if a data object type has not been defined before an object link definition or an action definition associated with the data object type is run. This can be because the software code for an object link type does not make the link itself between data object types but is a mechanism to process declarative statements on how an ontology schema appears. Advantageously, generating the in-memory model provides extra security that the defined ontology is functional. In some instances, the build module 124 can be operated on the backend server system 110 and the software codes for the definition types can be transferred over the network 130 to be compiled on the backend server system 110.

In some instances, the software development environment 126 can be integrated with code bindings that map the development language associated with the software development environment 126 with a development language associated with the backend server system 110. During the build process by the build module 124, the code binding map the software code in the definition types so that they can be readable by the backend server system 110. The code binding can be included in the plug-in for the software development environment 126.

The ontology SDK 112 and ontology definition file 114 can be formatted as JSON internal representations or files, zip files, and/or the like. The build process generating ontology SDK 112 and ontology definition file 114 can advantageously build a static ontology implementation that would produce the same software application each time it is used to index the same data structure. Accordingly, developers can ensure that the ontology is dependable and will not vary according to software updates. The ontology definition file 114 can be manually or automatically transferred to a backend server of the backend server system 110 over the network 130 where it can be used to generate a configuration, or ontology implementation. The ontology implementation may include information used for configuring the software application, such as widgets (e.g., a button, a tab with which users can interact), code (e.g., Python code), variables, and/or functions according to the ontology definition file 114 used to configure the software application. In some implementations, the ontology implementation can be stored by the software application service 104 using a JavaScript Object Notation ("JSON") format to define or describe the information (e.g., widgets, code, variables, and/or functions) and relationships (e.g., dependencies, lineage, or provenance) among the information used for configuring the software application.

Additionally, when each definition type is processed, the build module 124 may assign an application programming interface ("API") for the definition type according to its software code and automatically generate a library and/or document that list all APIs for the coded definition types in the ontology. The build module 124 can automatically implement the ontology SDK 112 in the software development environment 126 so that the ontology SDK 112 can provide functionality to the software development environment 126 for developing software applications that operates on components and relationships of the definition types. Furthermore, the assigned APIs in the ontology definition file 114 enable the ontology implementation to communicate with the ontology SDK 112 by being able to call the APIs from the software development environment 126 to generate a software application that operates on components and relationships of the definition types. The software application can be an interactive graphical representation of a data structure stored in the database module 108, that is accessible and manipulatable using the user interface module 102 on the backend server system 110. In some instances, the software development environment 126 can be accessed from the user interface module 122 to implement the ontology SDK 112 to generate a software application by communicating with the backend server system 110 to access a data set stored in the database module 108 that is indexed into an ontology 105 according to the ontology implementation. In other instances, the data set may be stored in the data store 140 and accessed locally or remotely by the software development environment 126, and the data set can be indexed using the ontology SDK 112.

In some instances, the build process may also generate a software template 116, or software application template package, which includes the ontology SDK 112, ontology definition file 114, and portions of software code. This software template 116 can be transferred over the network 130 either manually or automatically to the backend server system 110 and stored in software template database 106. The software template 116 can be accessed from the user interface module 102 to build a software application using the software application service 104 by operating on components according to the definition types. The portions of software code can be data integrations or data pipelines. In some instances, the software template 116 can include a generic software application associated with the in-memory model. In such instances, the generic software application may be based on a generic data set generated during the build process and developed according to the ontology implementation. The software template database 106 may be accessible to third party users so that the software template 116 can be copied so that it may be used and/or adjusted for use to build a software application using their own data. The software template database 106 and/or the ontology SDK 112 in the software template database 106 can be integrated with the plug-in to provide functionality to a local software development environment 126, such as by using the ontology SDK 112 to generate a library for software code. The software template 116 can be formatted as a JavaScript Object Notation ("JSON") schema, which can allow 3^{rd} party users to use the software template 116 with other development languages.

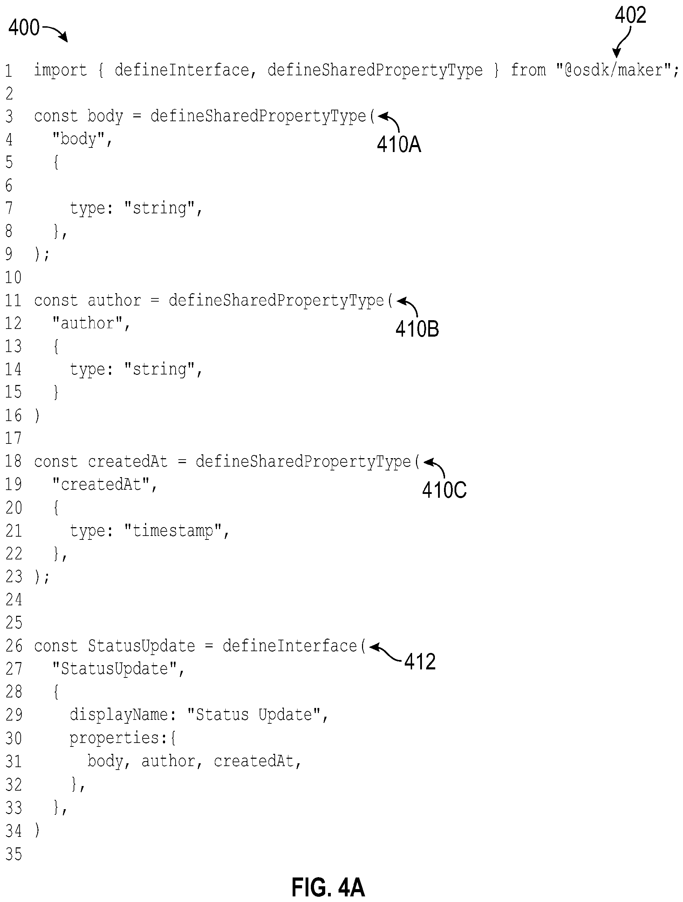

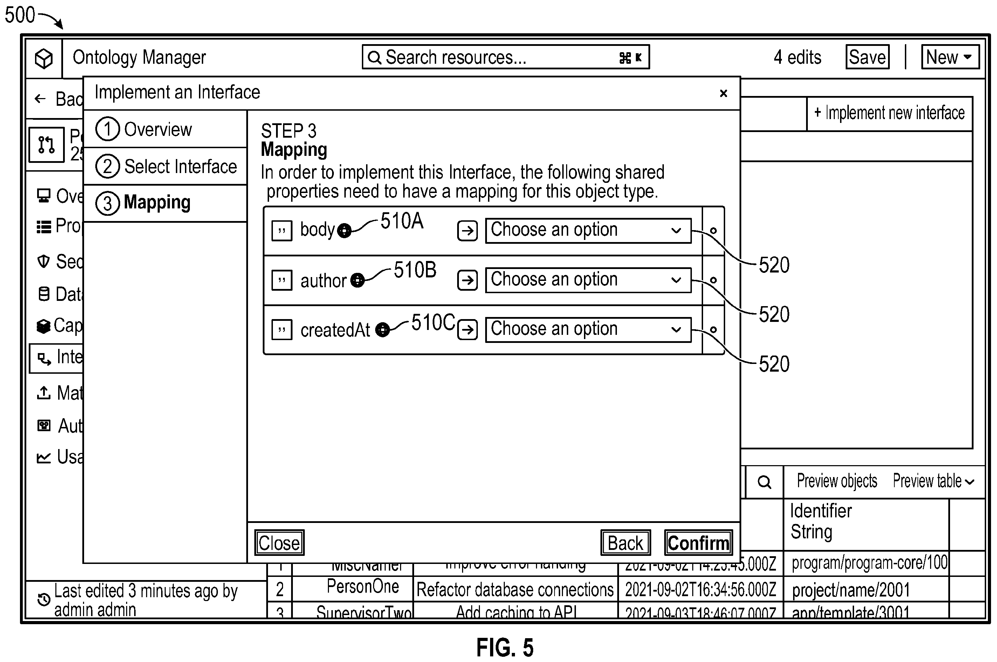

The user interface modules (102 and 122) can be configured to generate user interface data that may be rendered on a user device 120, such as to receive an initial user input, as well as later user input that may be used to initiate further data processing. In various implementations, the functionality discussed with reference to the user interface modules (102 and 122), and/or any other user interface functionality discussed herein, may be performed by a device or service outside of the backend server system 110 or user device 120 and/or the user interface modules (102 and 122) may be outside the backend server system 110 or user device 120. The user interface module 122 and user interface module 102 may both be rendered on a user device 120, but the user interface module 122 may be performed by a device or service on a server that is different than a backend server associated with the backend server system 110 that the user interface module 102 is performed on. For example, the user interface module 102 may be associated with a local software development environment 126. Example user interfaces are described in greater detail below with reference to FIGS. 4A-4B for the user interface module 102 associated with a backend server and with reference to FIG. 5 for the user interface module 122 associated with the local software development environment.

The database module 108 is configured to store data that may be accessed by the user device 120 and/or various aspects of the backend server system 110, as described herein. For example, the database module 108 is configured to store data/information that may be utilized by the ontology SDK 112, the ontology definition file 114, the software template 116, the software application service 104, and/or accessed or manipulated by the user device 120. The database module 108 of the backend server system 110 may obtain and store data and/or information from the data store 140. Data that may be stored by the database module 108 may include any type of electronic data, such as error logs, code files, documents, text, data files, books, manuals, emails, images, audio, video, databases, metadata, positional data (e.g., geo-coordinates), sensor data, web pages, time series data, and/or any combination of the foregoing and/or the like. The database module 108 may store the data, which may be received from the data store 140, using the ontology 105, or based on the ontology 105, which may define data types and associated properties, and relationships among data types, data object types, properties, and/or the like as defined by the ontology SDK 112, the ontology definition file 114, and/or the software template 116. The ontology 105 may constitute a way to represent things in the world. The ontology 105 may be used by an organization to model a view on what objects exist in the world, what their properties are, and how they are related to each other. The ontology 105 may be user-defined, computer-defined, or some combination of the two. The ontology 105 may include hierarchical relationships among data object types.

The software application service 104 can host, include, and/or provide one or more software applications, and information related to (e.g., configurations for configuring the one or more software applications) the one or more software applications. The software application service 104 may send and receive data to/from user device(s) 120. For example, the software application service 104 may connect to a data processing service through an application programming interface ("API") and retrieve or submit data to/from the data processing service through appropriate API calls. The data processing service may include any quantity of services (or "plug-ins") and any available type of service. For example, the data processing service may include indexing services, services for generating, creating, embedding and/or managing interactive objects in a graphical user interface, services for caching data, services for writing to databases, an ontology traversing service (e.g., for traversing the ontology 105 or performing search-arounds in the ontology 105 to surface linked objects or other data items) or any other services. In some instances, the software application service 104 can be accessed with the user interface module 102 to upload a data structure, or data set, associated with data objects of the data object types from the data store 140 to the database module 108 over the network 130. In some instances, the data structure may be associated with any components or relationships from the definition types in the ontology definition file 114. The software application service 104, accessed via the user interface module 102, can index the data structure with the ontology definition file 114 or ontology implementation to develop a software application. The software application service 104 may access and parse the ontology implementation to determine or identify actions (e.g., send an email, unsend an email, edit a document, or the like), data object types (e.g., an email data object type, a document data object type, or the like) that are associated with the software application.

Although not show in FIG. 1, the data processing service may be a part of the backend server system 110 (e.g., as part of a data processing service module of the backend server system 110), in whole or in part. Similarly, the software application service 104 may receive data from an API from user device(s) 120 through appropriate API calls. The software application service 104 can be utilized to perform various tasks for fulfilling an objective (e.g., sending an email, performing a calculation, editing a document, or the like) and/or a user request from the user device 120.

### Example Database and Data Models

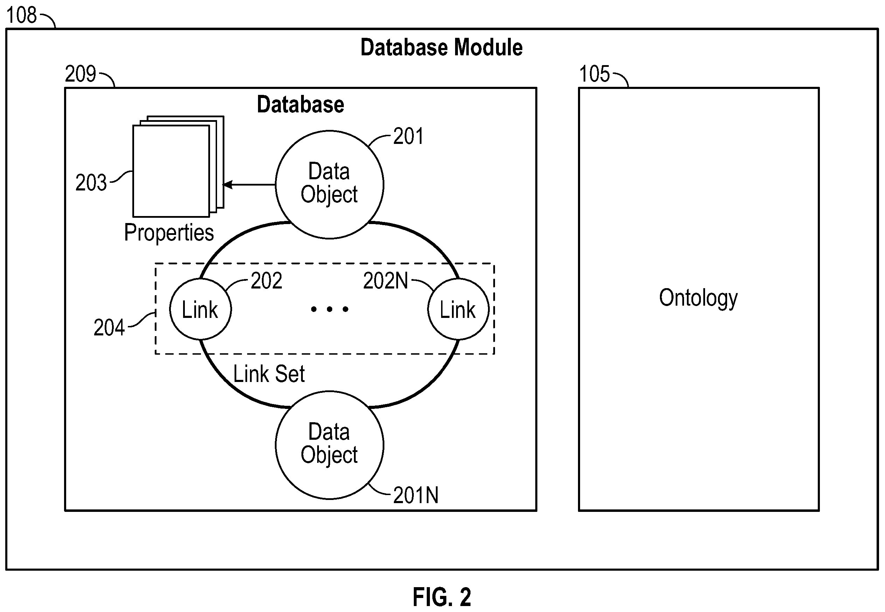

FIG. 2 illustrates an object-centric conceptual data model in the database module 108 according to various implementations of the present disclosure. The database module 108 may store the ontology 105 and the database 209. The ontology 105, as noted above, may include stored information providing a data model for storage of data in the database 209 according to the definition types in the ontology definition file 114. The ontology 105 may be defined by one or more data object types, which may each be associated with one or more properties. At the highest level of abstraction, data object 201 is a container for information representing things in the world. For example, the data object 201 can represent an entity such as a particular person, place, organization, date, market instrument, item, or other noun, where the entity may appear in text data such as a document, an e-mail message, a news report, a written paper, an article, or the like. Data object 201 can also represent an event that happens at a point in time or for a duration. Each data object 201 may be associated with a unique identifier that uniquely identifies the data object within the database 209 of the database module 108.

In various implementations, different types of data objects may have different property types. For example, a "Person" data object might have an "Eye Color" property type and an "Event" data object might have a "Date" property type. Each property 203 as represented by data in the database module 108 may have a property type defined by the ontology 105 used by the database module 108. Objects may be instantiated in the database 209 in accordance with the corresponding object definition for the particular object in the ontology 105. For example, a specific monetary payment (e.g., an object of type "event") of US$30.00 (e.g., a property of type "currency") taking place on 3/27/2009 (e.g., a property of type "date") may be stored in the database 209 as an event object with associated currency and date properties as defined within the ontology 105. The data objects defined in the ontology 105 may support property multiplicity. In particular, the data object 201 may be allowed to have more than one property 203 of the same property type. For example, a "Person" data object might have multiple "Address" properties or multiple "Name" properties. Each link 202 represents a connection between two data objects 201. In one implementation, the connection is either through a relationship, an event, or through matching properties. A relationship connection may be asymmetrical or symmetrical. For example, "Person" data object A may be connected to "Person" data object B by a "Child Of" relationship (where "Person" data object B has an asymmetric "Parent Of" relationship to "Person" data object A), a "Kin Of" symmetric relationship to "Person" data object C, and an asymmetric "Member Of" relationship to "Organization" data object X. The type of relationship between two data objects may vary depending on the types of the data objects. For example, "Person" data object A may have an "Appears In" relationship with "Document" data object Y or have a "Participate In" relationship with "Event" data object E. As an example of an event connection, two "Person" data objects may be connected by an "Airline Flight" data object representing a particular airline flight if they traveled together on that flight, or by a "Meeting" data object representing a particular meeting if they both attended that meeting. In one implementation, when two data objects are connected by an event, they are also connected by relationships, in which each data object has a specific relationship to the event, such as, for example, an "Appears In" relationship.

As an example of a matching properties connection, two "Person" data objects representing a brother and a sister, may both have an "Address" property that indicates where they live. If the brother and the sister live in the same home, then their "Address" properties likely contain similar, if not identical property values. In one implementation, a link between two data objects may be established based on similar or matching properties (e.g., property types and/or property values) of the data objects. These are just various examples of the types of connections that may be represented by a link and other types of connections may be represented; implementations are not limited to any particular types of connections between data objects. For example, a document might contain references to two different objects. For example, a document may contain a reference to a payment (one object), and a person (a second object). A link between these two objects may represent a connection between these two entities through their co-occurrence within the same document. Each data object 201 can have multiple links with another data object 201 to form a link set 204. For example, two "Person" data objects representing a husband and a wife could be linked through a "Spouse Of" relationship, a matching "Address" property, and one or more matching "Event" properties (e.g., a wedding). Each link 202 as represented by data in the database 209 may have a link type defined by the ontology 105 and/or used by the database 209.

For ease of understanding, in some implementations, data objects (e.g., the data object 201 and the data object 201N), links between data objects (e.g., the link 202 and link 202N) that may represent relationships between the data objects, and properties of data objects (e.g., the properties 203) can be visualized using one or more graphical user interfaces (GUI). For example, an example user interface may show a graphical representation of relationships between data objects that are represented as nodes in the graphical representation. The data objects may include, for example, person data objects, flight data objects, account data objects, computer data objects, and/or the like. The objects/nodes may have relationships and/or links with any of the other objects/nodes.

In some implementations, relationships between data objects may be stored as links, or in some implementations, as properties, where a relationship may be detected between the properties. In some cases, as stated above, the links may be directional. For example, a payment link may have a direction associated with the payment, where one person object is a receiver of a payment, and another person object is the payer of payment.

In addition to visually showing relationships between the data objects, a user interface may allow various other manipulations. For example, the objects within database module 108 may be searched using a search interface (e.g., text string matching of object properties), inspected (e.g., properties and associated data viewed), filtered (e.g., narrowing the universe of objects into sets and subsets by properties or relationships), and statistically aggregated (e.g., numerically summarized based on summarization criteria), among other operations and visualizations.

### Example Functionality and Operations of the System

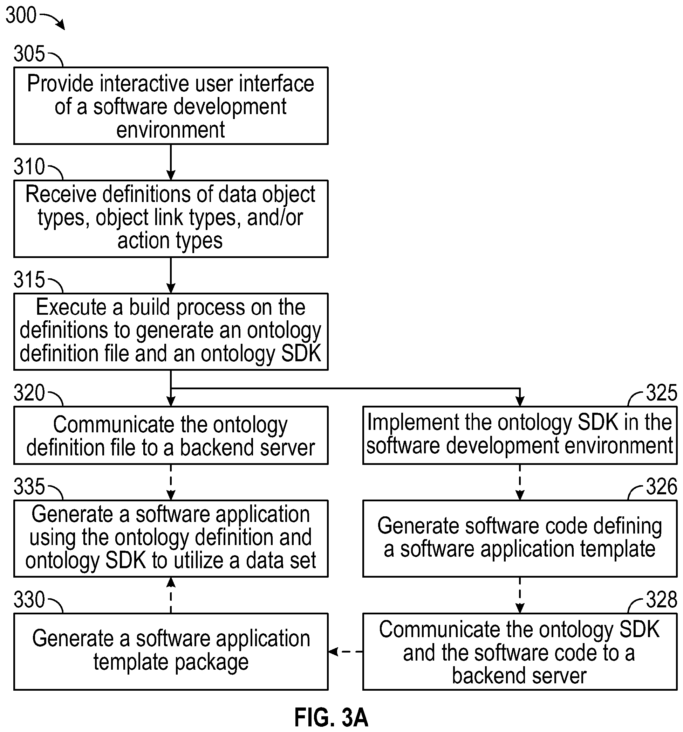

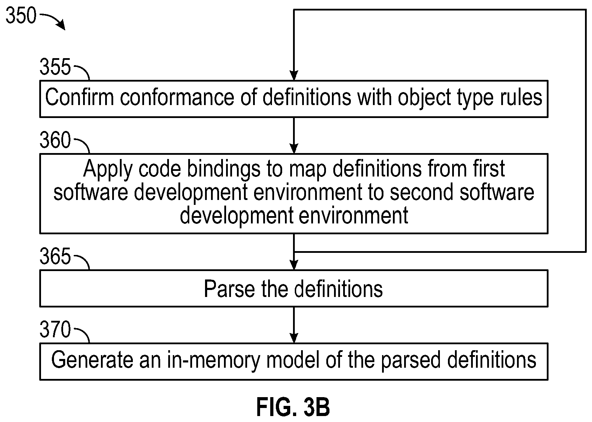

FIGS. 3A and 3B show flowcharts illustrating example operations of the workflow transition system (and/or various other aspects of the example computing environment 100), according to various embodiments. The blocks of the flowcharts illustrate example implementations, and in various other implementations various blocks may be rearranged, optional, and/or omitted, and/or additional block may be added. In various embodiments, the example operations of the system illustrated in FIGS. 3A and 3B may be implemented, for example, by the one or more aspects of the workflow transition system, various other aspects of the example computing environment 100, and/or the like.

FIG. 3A depicts a flowchart illustrating an example method 300 according to various embodiments. The method 300 may be implemented, for example, by the workflow transition system of FIG. 1 to define components and relationships, such as data object types, object link types, and action types, associated with a software application. In various implementations, the method 300 may be performed in part or in full by the workflow transition system. For example, the workflow transition system may perform blocks 305, 310, 315, 320, and 325 without performing one or more of blocks 335, 326, 328, and/or 330. In various implementations, the blocks 320, 335, and 328 may be performed by the interactive graph generator concurrently and/or sequentially.

At block 305, the workflow transition system may provide an interactive user interface of a software development environment. For example, as mentioned above, the interactive user interface can generate user interface data that may be rendered on a user device 120 to access the software development environment 126. The software development environment 126 can be configured to enable a developer to compose and execute lines of software code and view associated output results via a programming session quickly and interactively.

At block 310, the workflow transition system can receive definitions of data object types, object link types, and/or action types. For example, these definitions can be composed as software code that defines data object types, though this term is intended to encompass definition types for any single or combination of components (e.g., data objects, actions, functions, logics) or relationships (e.g., links, data dependencies, lineage, or provenance) between components. The software code can be used to either create a new definition for a data object type or update an existing definition for a data object type. These software codes can be formatted as code, variables, and/or functions defining the data object type according to a domain-specific language, such as but not limited to Typescript, Java, Go, Python, NPM, and/or the like. The data object type can be usable to develop software applications for data sets associated with data objects of the data object type. Advantageously, the workflow transition system provides the capability to define components and relationships without accessing a particular data set. Previously, defining object types may have required uploading a data set onto a backend server and integrating the data set into a format, such as particular rows and columns in a spreadsheet, which could be indexed to assign each property of a data object type its own API. Furthermore, any revisions to the data object types would require direct manipulation of the data set.

At block 315, the workflow transition system can execute a build process using the build module 124 on the definitions to generate an ontology SDK 112 and ontology definition file 114. For example, the build process generating ontology SDK 112 and ontology definition file 114 can advantageously build a static ontology implementation that would produce the same software application each time it is used to index the same data structure, and which can be generically applicable to various data sets. Accordingly, developers can ensure that the ontology is dependable and has cumulative value. Prior to the workflow transition system, building an ontology SDK required accessing the backend server to directly index a particular data set and then access a separate user interface associated with the backend server to generate the ontology SDK. Furthermore, any errors during generating the ontology SDK or using the ontology SDK to develop a software application would require returning to the user interface used to index the data set. Advantageously, the workflow transition system can allow generation of an ontology SDK on a single user interface, be able to develop it in the user's local software development environment 126, and not require access or manipulation of a data set. The ontology SDK 112 and ontology definition file 114 can be formatted as JSON internal representations or files, zip files, and/or the like. For example, sub-routines associated with block 315 are further described in FIG. 3B.

At block 320, the workflow transition system can communicate the ontology definition file 114 to a backend server associated with the backend server system 110. For example, the ontology definition file 114 can be manually or automatically transferred to a backend server of the backend server system 110 over the network 130 where it can be used to generate an ontology implementation. The ontology implementation may include information used for configuring the software application, such as widgets (e.g., a button, a tab with which users can interact), code (e.g., Python code), variables, and/or functions according to the ontology definition file 114 used to configure a software application that operates on data objects of the data object type. In some implementations, the ontology implementation can be stored by the software application service 104 using a JavaScript Object Notation ("JSON") format to define or describe the information (e.g., widgets, code, variables, and/or functions) and relationships (e.g., dependencies, lineage, or provenance) among the information used for configuring the software application.

At block 325, the workflow transition system can implement the ontology SDK 112 in the software development environment 126. For example, ontology SDK 112 can be automatically implemented in the software development environment 126 so that the ontology SDK 112 can provide functionality to the software development environment 126 for developing software applications that operates on data objects of the data object type. Block 325 can occur prior to, after, or simultaneously with block 320.

Optionally, at block 335, the workflow transition system can generate a software application using the ontology definition file 114 and the ontology SDK 112 to utilize a data set. For example, the assigned APIs in the ontology definition file 114 enable the ontology implementation to communicate with the ontology SDK 112 by being able to call the APIs from the software development environment 126 to generate a software application that operates on data objects of the data object type. The definitions associated with the ontology definition file 114 may be formatted to correspond to data sets that store the components, such as the data objects. These data structures can be stored in the data store 140, which are transferred over the network 130 to the database module 108 when developing a software application. The software development environment 126 may be enabled for the workflow transition system using a plug-in associated with the backend server that can integrate the software development environment 126 with the backend server system 110. The software application can be an interactive graphical representation of a data structure stored in the database module 108, that is accessible and manipulatable using the user interface module 102 on the backend server system 110.

Optionally, at block 326, the workflow transition system can generate software code defining a software application template. For example, software code associated with the software application template, or software template 116, can be generated as a part of the build process. As such, the software code can be generated simultaneously or sequentially with when the ontology definition file 114 and/or the ontology SDK 112 are generated. In some instances the software code can be generated based on ontology definition file 114 and/or the ontology SDK 112. The portions of software code can be data integrations or data pipelines. In some instances, the software code can include a generic software application associated with an in-memory model generated during the build process, as further described in FIG. 3B. In such instances, the generic software application may be based on a generic data set generated during the build process and developed according to the ontology implementation generated from the ontology definition file 114. The software template 116 can be accessed from the user interface module 102 to build a software application using the software application service 104 by operating on components according to the definition types.

Optionally, at block 328, the workflow transition system can communicate the ontology SDK 112 and the software code to the backend server of the backend server system 110. For example, the ontology SDK 112 and the software code can be transferred over the network 130 either manually or automatically to the backend server system 110 and stored in software template database 106.

Optionally, at block 330, the workflow transition system can generate a software application template package, or software template 116. For example, the software template 116 can include the ontology SDK 112, ontology definition file 114, and the software code (or portions of the software code). In some instances, the software template 116 can be generated on a local server associated with the user device 120 before being communicated to the backend server, skipping optional block 328. The software template 116 can be stored in the software template database 106. In some instances, the software template database 106 may be accessible to third party users so that the software template 116, which includes the ontology SDK 112 and ontology definition file 114, can be copied so that it may be used and/or adjusted for use to build a software application using their own data, as described in block 335. The software template database 106 and/or the ontology SDK 112 in the software template database 106 can be integrated with the plug-in to provide functionality to a local software development environment 126, such as by using the ontology SDK 112 to generate a library for software code. The software template 116 can be formatted as a JavaScript Object Notation ("JSON") schema, which can allow 3^{rd} party users to use the software template 116 with other development languages.

FIG. 3B depicts a flowchart illustrating an example method 350 according to various embodiments. The method 350 may be implemented, for example, by the workflow transition system of FIG. 1 as sub-routines for the build process in block 315 to generate an ontology SDK 112 and ontology definition file 114 associated with components and relationships, such as data object types, object link types, and action types, associated with a software application. As mentioned above, in some instances, the build process in block 315 can also generate the software code or portions of associated with the software template 116. In various implementations, the method 350 associated with sub-routines for block 315 may be performed in part or in full by the workflow transition system. For example, the workflow transition system may perform blocks 365 and 370 without performing one or more of blocks 355 and/or 360.

Optionally, at block 355, the workflow transition system can confirm conformance of definitions with object type rules. For example, the development language of the local software development environment 126 used for the software code can confirm that the format of the software code conforms with object type rules. The object type rules can ensure that the software code is in a format that is processable by the build module 124 to generate ontology files that are used to develop a software application by providing examples of required variables or functions in the software code. In some instances, the software development environment 126 can analyze the inputs based on the object types rules to prevent the build process from executing and/or alert the user if the software code is written in an unaccepted format. These object type rules can be based on existing libraries associated with the domain specific language, from an existing ontology SDK and associated files, and/or integrated with plug-in for the workflow transition system. In some instances, software development environment 126 can analyze the inputs based on the object types rules to verify whether variables of the software code are re-used in different ways. Block 355 can alternatively occur during the receipt of the definitions in block 310 and/or during initial execution of the build process in block 315.

Optionally, at block 355, the workflow transition system can apply code bindings to map definitions from a first software development environment to a second software development environment. For example, during the build process by the build module 124, the code binding map the software code in the definition types so that they can be readable by the backend server system 110. The code binding can be included in the plug-in for the software development environment 126. Block 355 can occur simultaneously or sequentially with block 365.

At block 365, the workflow transition system can parse the definitions. For example, during the build process, each software code for each definition is run and individually parsed. During parsing, when a definition type is processed, a marker is generated according to the definition type. By example, when a data object type software code is parsed, a marker in a schema is generated that represents a data object of the data object type. Similarly, if an object link type software code is parsed, a declarative statement is generated on how associated data objects should be connected in the schema. This declarative statement therefore does not require the data object marker to exist in the schema but assumes that it does. Each software code for the definition types is individually parsed to form pieces of a schema that is compiled together in block 370.

At block 370, the workflow transition system can generate an in-memory model of the parsed definitions. For example, the build module 124 internally builds an in-memory model according to each definition type parsed, such that each marker and connection in the schema is compiled together to fit together. In one instance, when the software code for a first data object type is run by the build module 124 and a first marker is generated that represents a data object of the first data object type, and when the software code for a second data object type is run and a second marker is generated that represents a data object of the second data object type, then when the software code is run for an object link type associated with a relationship between the first data object type and the second data object type, then both the first marker and the second marker are called and updated to connect the markers according to the defined relationship. Even if the object link type software code were parsed first, the build module 124 would generate the connection schema and add the data object markers once they are parsed and added to the schema. In some instances, the assumed data object marker may be treated as a created data object type definition even if one is not parsed if there is enough information from the parsed definitions, such as including at least a type, object API, name, and property. Thus, disparate software codes can be used together to form an in-memory model even if a data object type has not been defined before an object link definition or an action definition associated with the data object type is run.

Advantageously, generating the in-memory model provides extra security that the defined ontology is functional. In some instances, the build module 124 can be operated on the backend server system 110 and the software codes for the definition types can be transferred over the network 130 to be compiled on the backend server system 110.

### Example User Interfaces and Related Functionality

FIGS. 4A-4D show example user interfaces that illustrate example interactive graphical representations associated with a software application to allow the user device 120 to generate definition types on the software development environment 126. In various implementations, the example user interfaces 400, 450, 470 may be presented through the user interface module 122 accessing the software development environment 126 and/or on the user device 120.

As shown in FIG. 4A, an example user interface 400 may include an interactive graphical representation of the software development environment 126 that includes software code. The software development environment 126 can be used by a user to input definitions for various definition types, such as data object types, object link types, property types, action types, and/or the like. The software code can include call functions 402 that can access functions from a library associated with software code syntax that is composed and executed accordingly can provide functionality to the software development environment 126 to develop software applications that operate on components according to the definition types composed. In this example, FIG. 4A displays the functions "defineInterface" and "defineSharedPropertyType" 404 that are called to be used from a plug-in "osdk/maker." The software code can include definition types 410A-C, 412 that can be used for various data object types, with Shared Property Type definitions 410A-C displaying software code that defines the different property types and Interface definition 412 displaying software code that defines an interface usable to display a later generated software application in relation to the Shared Property Type definitions 410A-C as "StatusUpdate." Although the data object type is not specified, the software development environment 126 can allow a pseudo property name to be used when defining associated definition types. For example, without specifying the data object type that is being further defined for these propery types, each of the Shared Property Type definitions 410A-C are named as "body," "author," and "createdAt" with 410A and 410B being text "string" types and 410C being a time-based "timestamp" type. Furthermore, during the build process, the workflow transition system may be able to assume these three property types are related to a single data object type based on their use in the Interface definition 412. In some instances, if an in-memory model determines that the combination of definitions was not sufficient to fully define the pseudo data object type after all definitions are parsed, then the software development environment 126 can either prevent the build process from being completed and/or provide an alert to the user of an error.

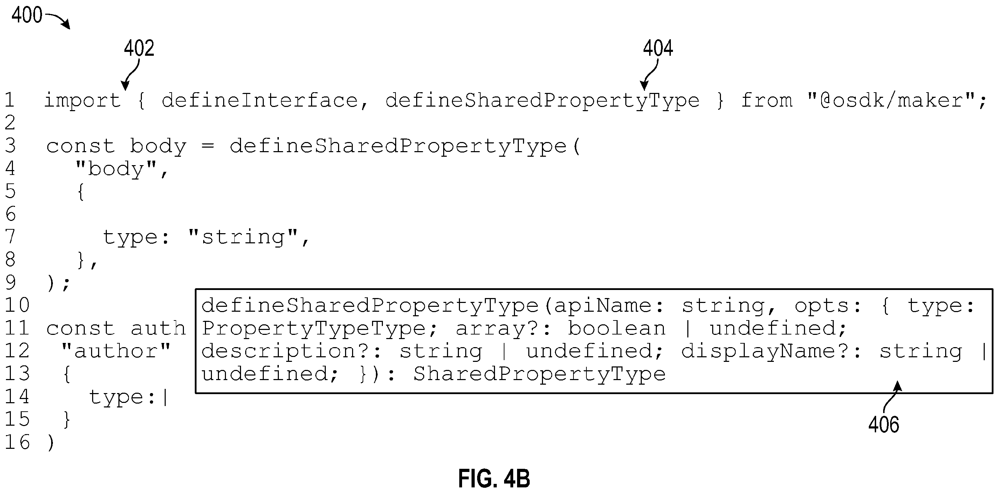

As shown in FIG. 4B, the example user interface 400 may include an interactive graphical representation of the software development environment 126 that includes a definitional syntax pop-up 406 based on object type rules. During the importation of "defineSharedPropertyType" 404 in the call function 402, the library associated with object type rules or format can be added that can govern syntax rules of the software code function so that the backend server can understand the inputted definition types. As shown in FIG. 4B, the definitional syntax pop-up 406 can be generated on example user interface 400 of the software development environment 126 to provide the format for a software code based on the object type rules. The definitional syntax pop-up 406 can be triggered to appear in response user input to determine that one of the definition types, such as 410A-C, 412, from the library associated with the call function 402, is being used. For example, the definitional syntax pop-up 406 can be triggered to appear when "defineSharedPropertyType" is inputted to the software development environment 126. In some instances, the definitional syntax pop-up 406 may only provide the suggested format for the definition type without changing. In other instances, the definitional syntax pop-up 406 may provide an alert to the user if an analyzed definitional input is not of the expected type according to the object type rule. In some instances, the software development environment 126 may prevent the user from inputting unexpected values based on the analyzed input. In other instances, instead of or in conjunction with the definitional syntax pop-up 406, the software development environment 126 may include a suggestion in the same line as the input, such as suggesting "string" after the user inputs "type:" based on the object type rules. In such instances, the user can choose to accept the suggestion and it can automatically generate as an input. In other instances, the object types rules can be used to analyze all the inputted definition types as it is processed by the build module 124 to generate ontology files usable to develop a software application. In such instances, the syntax of the definition types can be analyzed while each definition type is parsed to generate the in-memory model. If a definition type does not conform with the object type rules, the software development environment 126 can prevent completion of the build process and/or alert the user.

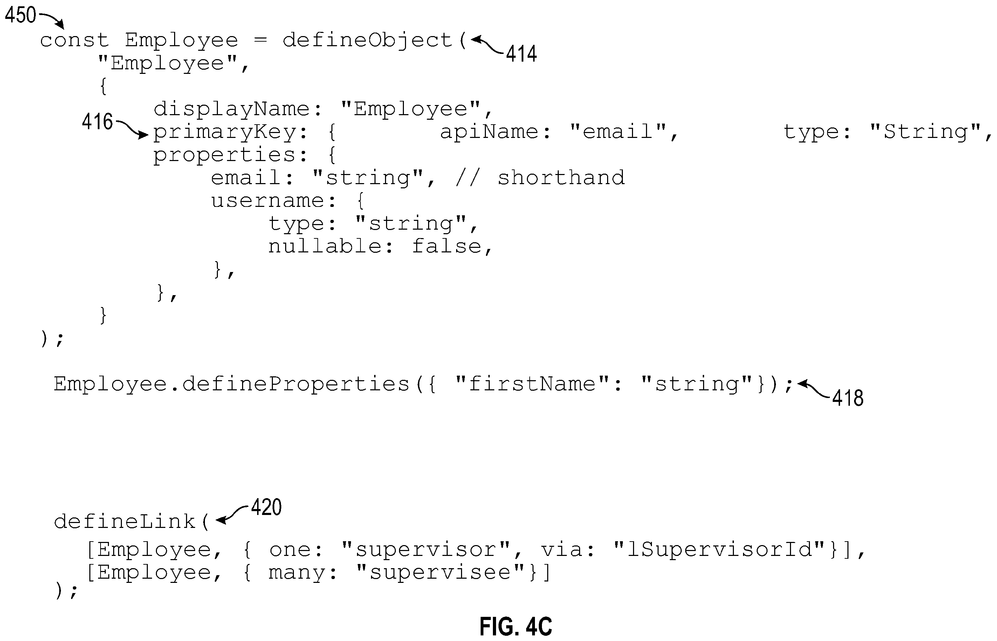

As shown in FIG. 4C, an example user interface 450 may include an interactive graphical representation of the software development environment 126 that include software code for defining different definition types. For example, the data object type definition 414 illustrates software code that can be used to define a data object type, which may be called for other definition types, such as but not limited to object link types, property types, actions, and/or the like. The data object type definition 414, shown in FIG. 4C, is defining a data object type for an employee. As shown, the data object type definition 414 includes an input from the user for a display name "Employee." The data object type definition 414 includes an input from the user for a primaryKey including an apiName of "email" and a type of "string." The data object type definition 414 includes an input from the user for different property type definitions 416 including "email" and "username," and property types "string." As shown in FIG. 4A, the properties of a data object type can be later defined out of the data object type definition 414. The object type definition 414 also shows the "email" property written in shorthand as compared to the "username" property, which further includes an input as "nullable: false." In some instances, defining a data object type may require providing at least type, object API, name, and property. As mentioned above, properties of a data object type can be defined in a different definition, as the property definition 418 illustrates software code to update the "Employee" data object with a new property "firm name" with a property of text "string." If the property had already existed, in some instances, the data object could replace it with this later property, and in other instances, the object type rules in the build process could analyze the syntax of the software code for definition types and prevent it from being parsed to generate the ontology SDK 112 and ontology definition file 114. The object link type definition 420 illustrates software code to define a link between properties "lead" and "peeps" for the same data object "Employee" in a one-to-many configuration. In an implementation, a user of the system can use the software development environment 126 to create and/or modify the object types and define attributes of the data object types. In an implementation, a user of the system uses the software development environment 126 to create and/or modify the properties and define attributes of the properties. In an implementation, a user of the system uses the software development environment 126 to create the object link types and indications associated with the properties of the data object types. Alternatively, other programs, processes, or programmatic controls may be used to create software code for type definitions, and using editors is not required.

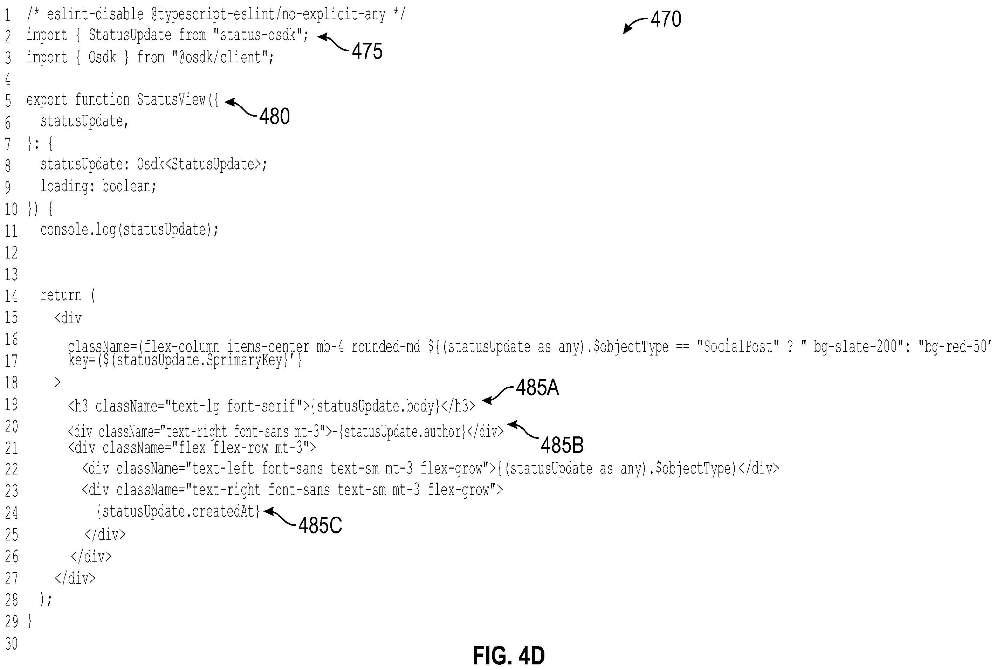

As shown in FIG. 4D, an example user interface 450 may include an interactive graphical representation of the software development environment 126 being used to generate a software template 116 from the ontology SDK 112. As shown, the software code can include an import function 475 that imports Interface definition 412. The software code shown in FIG. 4D can be used to generate a software template 116 based on functions associated with the ontology SDK 112. For example, the Interface definition 412 can be shown to be exported using the export function 480 after being imported, with additional inputs from the user for display functions 485A-C to call respective Shared Property Type definitions 410A-C. By running the software code shown in FIG. 4D, a software template 116 can be generated based on the previously defined definition types and interface. At a later stage, a user may use the software template 116 to generate a software application that is associated with Shared Property Type definitions 410A-C, as the user can then index their particular data set using the definition types listed in the software template 116.

In accordance with the discussion above for FIG. 2, an ontology 105 comprises stored information providing the data model of data according to the ontology definition file 114 that are parsed from the definition type software code, and the ontology is defined by one or more data object type definitions 414, one or more property type definitions 416, 418, and one or more object link types definitions 420. Based on ontology definition file 114, one or more data objects 201, 201N may be instantiated in the database 209 based on respective determined object types, and each of the objects 201, 201N has one or more properties 203 that are instantiated based on property types. Two data objects 201, 201N may be connected by one or more links 202, 202N that may be instantiated based on link types. Each of the property types may comprise one or more data types, such as a string, number, and/or the like. Property types may be instantiated based on a base property type. For example, a base property type may be "Locations" and a property type may be "Home."

FIG. 5 shows an example user interface 500 that includes an interactive graphical representation associated with the backend server system 110, according to various implementations of the present disclosure. In various implementations, the example user interface 500 may be presented through the user interface module 102 of the backend server system 110 and/or on the user device 120. The example user interface 500 may include an interactive graphical representation of the backend server system 110 that is associated with the Shared Property Type definitions 410A-C when importing the software template 116 to the backend server and mapping the imported shared properties "body," 510A "author," 510B and "createdAt" 510C to index the data set stored in the database module 108 according to the user input 520. After the data set is indexed, the software application can be developed and visualized as an interactive graphical representation.

In some implementations, creating a property type involves defining at least one parser definition. A parser definition comprises metadata that informs a parser how to parse a data set to determine whether values in the data set can be assigned to the property type that is associated with the parser definition. Using the data types defined in the ontology, a data set, such as one stored in the database module 108, may be parsed by the parser determine which object type should receive data from a record created from the data set, and which property should be assigned to data from individual field values in the data set. Based on the object-property mapping, the parser selects one of the parser definitions that is associated with a property type in the data set. The parser parses an input data field using the selected parser definition, resulting in creating new or modified data. New or modified data is added to the database 209 according to ontology 105 by storing values of the new or modified data in a property of the specified property type. As a result, the data set having varying format or syntax can be created in database 209. Ontology 105 may be modified at any time using the software development environment 126 to develop a new ontology SDK 112 and ontology definition file 114.

The properties, objects, and links (e.g., relationships) between the objects that are defined using the workflow transition system can be used to develop a software application by applying the ontology SDK 112, and/or the software template 116, to a particular data set that can be visualized using a graphical user interface (GUI) as an interactive graphical representation. For example, each person node (associated with person data objects), flight node (associated with flight data objects), financial account node (associated with financial account data objects), and computer node (associated with computer data objects) may have relationships and/or links with any of the other nodes through, for example, other objects such as payment objects, that are represented as an interactive graphical representation. Relationships between data objects of the data object types may be stored as links of the object link types, or in some implementations, as properties, where a relationship may be detected between the properties. In some cases, as stated above, the links may be directional. For example, a payment link may have a direction associated with the payment, where one person object is a receiver of a payment, and another person object is the payer of payment. In addition to visually showing relationships between the data objects, the user interface may allow various other manipulations. For example, the objects within database 209 may be searched using a search interface (e.g., text string matching of object properties), inspected (e.g., properties and associated data viewed), filtered (e.g., narrowing the universe of objects into sets and subsets by properties or relationships), and statistically aggregated (e.g., numerically summarized based on summarization criteria), among other operations and visualizations.

### Additional Example Implementations and Details

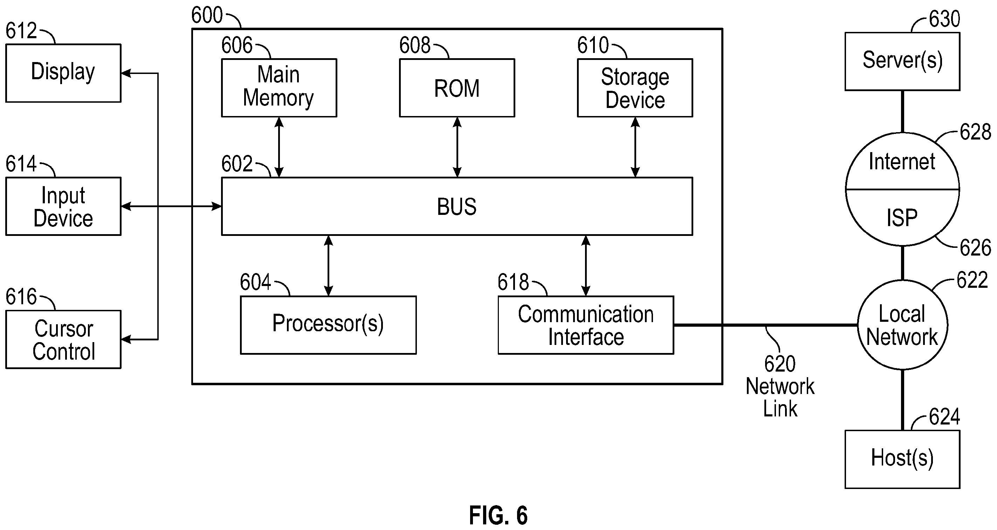

In an implementation of the system (e.g., one or more aspects of the backend server system 110, one or more aspects of the user device 120, one or more aspects of the computing environment 100, and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 6) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In various implementations the virtual computing environment may comprise one or more virtual machines, containers, and/or other types of emulations of computing systems or environments. In various implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In various implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In various alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in various implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 6 shows a block diagram that illustrates a computer system 600 upon which various implementations and/or aspects (e.g., one or more aspects of the computing environment 100, one or more aspects of the backend server system 110, one or more aspects of the user device 120, one or more aspects of the data store 140, and/or the like) may be implemented. Multiple such computer systems 600 may be used in various implementations of the present disclosure. Computer system 600 includes a bus 602 or other communication mechanism for communicating information, and a hardware processor, or multiple processors, 604 coupled with bus 602 for processing information. Hardware processor(s) 604 may be, for example, one or more general purpose microprocessors.

Computer system 600 also includes a main memory 606, such as a random-access memory (RAM), cache and/or other dynamic storage devices, coupled to bus 602 for storing information and instructions to be executed by processor 604. Main memory 606 also may be used for storing temporary variables or other intermediate information during execution of instructions to be executed by processor 604. Such instructions, when stored in storage media accessible to processor 604, render computer system 600 into a special-purpose machine that is customized to perform the operations specified in the instructions. The main memory 606 may, for example, include instructions to implement server instances, queuing modules, memory queues, storage queues, user interfaces, and/or other aspects of functionality of the present disclosure, according to various implementations.

Computer system 600 further includes a read only memory (ROM) 608 or other static storage device coupled to bus 602 for storing static information and instructions for processor 604. A storage device 610, such as a magnetic disk, optical disk, or USB thumb drive (Flash drive), and/or the like, is provided and coupled to bus 602 for storing information and instructions.

Computer system 600 may be coupled via bus 602 to a display 612, such as a cathode ray tube (CRT) or LCD display (or touch screen), for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computer system 600 may include a user interface module to implement a GUI that may be stored in a mass storage device as computer executable program instructions that are executed by the computing device(s). Computer system 600 may further, as described below, implement the techniques described herein using customized hard-wired logic, one or more ASICs or FPGAs, firmware and/or program logic which in combination with the computer system causes or programs computer system 600 to be a special-purpose machine. According to one implementation, the techniques herein are performed by computer system 600 in response to processor(s) 604 executing one or more sequences of one or more computer-readable program instructions contained in main memory 606. Such instructions may be read into main memory 606 from another storage medium, such as storage device 610. Execution of the sequences of instructions contained in main memory 606 causes processor(s) 604 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 604 for execution. For example, the instructions may initially be carried on a magnetic disk or solid-state drive of a remote computer. The remote computer can load the instructions into its dynamic memory and send the instructions over a telephone line using a modem. A modem local to computer system 600 can receive the data on the telephone line and use an infra-red transmitter to convert the data to an infra-red signal. An infra-red detector can receive the data carried in the infra-red signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card, cable modem, satellite modem, or a modem to provide a data communication connection to a corresponding type of telephone line. As another example, communication interface 618 may be a local area network (LAN) card to provide a data communication connection to a compatible LAN (or WAN component to communicated with a WAN). Wireless links may also be implemented. In any such implementation, communication interface 618 sends and receives electrical, electromagnetic, or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the worldwide packet data communication network now commonly referred to as the "Internet" 628. Local network 622 and Internet 628 both use electrical, electromagnetic, or optical signals that carry digital data streams. The signals through the various networks and the signals on network link 620 and through communication interface 618, which carry the digital data to and from computer system 600, are example forms of transmission media.

Computer system 600 can send messages and receive data, including software code, through the network(s), network link 620 and communication interface 618. In the Internet example, a server 630 might transmit a requested code for an application program through Internet 628, ISP 626, local network 622 and communication interface 618.

The received code may be executed by processor 604 as it is received, and/or stored in storage device 610, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computerized method, performed by a computing system having one or more hardware computer processors and one or more non-transitory computer-readable storage devices storing software instructions executable by the computing system, the computerized method comprising: providing an interactive user interface of a software development environment; receiving, via the interactive user interface and from a user, definitions of one or more data object types, wherein the data object types include respective one or more properties; executing a build process on the definitions of the one or more data object types to generate: an ontology definition file; and an ontology software development kit ("SDK"); automatically communicating the ontology definition file to a backend server, wherein the ontology definition file is usable by the backend server to generate an ontology implementation, and wherein the ontology implementation is usable in execution of software applications that operate on data objects of the one or more data object types; and automatically implementing the ontology SDK in the software development environment, wherein the ontology SDK is configured to provide functionality to the software development environment for developing software applications that operate on data objects of the one or more data object types.

Clause 2. The computerized method of Clause 1, wherein executing the build process further includes: generating a software application template package, wherein the application template package includes the ontology definition file, the ontology SDK, and one or more portions of software code defining a software application template, wherein the software application template package is usable for building a software application that operates on data objects of the one or more data object types.

Clause 3. The computerized method of Clause 2 further comprising: automatically communicating the software application template package to the backend server.

Clause 4. The computerized method of Clause 3, wherein the software application template package is available from the backend server to a second user for building the software application.

Clause 5. The computerized method of any one of Clauses 1-4, further comprising: receiving, via the interactive user interface and from the user, definitions of one or more object link types, wherein the object link types include respective one or more indications of associated data object types; and executing the build process on the definitions of the one or more object link types to generate: the ontology definition file; and the ontology software development kit ("SDK"); wherein the ontology implementation is usable in execution of software applications that operate on object links of the one or more object link types and the ontology SDK is further configured to provide functionality to the software development environment for developing software applications that operate on object links of the one or more object link types.

Clause 6. The computerized method of Clause 5, wherein the one or more indications are based on at least one of the respective one or more properties of the associated data object types.

Clause 7. The computerized method of any one of Clauses 5 or 6, wherein the one or more indications are between a first data object type and at least one second data object type, the first data object type being different from the at least one second data object type.

Clause 8. The computerized method of any one of Clauses 1-7, wherein the definitions are associated with a code binding configured to map a first development language associated with the software development environment with a second development language associated with the backend server.

Clause 9. The computerized method of any one of Clauses 1-8, wherein the software development environment is configured to analyze the definitions to confirm conformance with one or more object type rules.

Clause 10. The computerized method of any one of Clauses 1-9, further comprising: receiving, via a second interactive user interface associated with the backend server and from the user, a data set associated with the data objects of the one or more data object types; and developing, via the second interactive user interface, a software application by indexing the data set according to the definitions of the one or more data object types using the ontology definition file.

Clause 11. The computerized method of any one of Clauses 1-10, further comprising: receiving, via the interactive user interface and from the user, a data set associated with the data objects of the one or more data object types; and developing, via the interactive user interface, a software application by indexing the data set according to the definitions of the one or more data object types using the ontology SDK.

Clause 12. The computerized method of any one of Clauses 1-11, further comprising: receiving, via the interactive user interface and from the user, definitions of one or more action types, wherein the action types include at least one of declarations or queries to the one or more properties of associated data object types; and executing the build process on the definitions of the one or more action types to generate: the ontology definition file; and the ontology software development kit ("SDK"); wherein the ontology implementation is usable in execution of software applications that operate on actions of the one or more action types and the ontology SDK is further configured to provide functionality to the software development environment for developing software applications that operate on actions of the one or more action types.

Clause 13. The computerized method of any one of Clauses 1-12, wherein executing the build process includes: parsing the definitions of the one or more data object types; and generating an in-memory model from the parsed definitions of the one or more data object types.

Clause 14. The computerized method of any one of Clauses 1-13, wherein the definitions of one or more data object types are formatted to correspond to one or more data structures, the one or more data structures configured to store the data objects.

Clause 15. The computerized method of any one of Clauses 1-14, wherein the definitions of one or more data object types comprise a format of at least one of code, variables, or functions by which the user defines the one or more data object types and the associated one or more properties.

Clause 16. The computerized method of any one of Clauses 1-15, wherein the ontology definition file and/or the ontology SDK are formatted as JSON files.

Clause 17. A system comprising: one or more computer-readable storage mediums configured to store program instructions; and one or more processors configured to execute the program instructions to cause the system to perform the computer-implemented method of any of Clauses 1-16.

Clause 18. One or more computer-readable storage mediums configured to store program instructions, the program instructions executable by one or more processors to cause the one or more processors to perform the computer-implemented method of any of Clauses 1-16.

## Claims

1. A computerized method, performed by a computing system having one or more hardware computer processors and one or more non-transitory computer-readable storage devices storing software instructions executable by the computing system, the computerized method comprising:
providing an interactive user interface of a software development environment;
receiving, via the interactive user interface and from a user, definitions of one or more data object types, wherein the data object types include respective one or more properties;
executing a build process on the definitions of the one or more data object types to generate:
an ontology definition file; and
an ontology software development kit ("SDK");
automatically communicating the ontology definition file to a backend server, wherein the ontology definition file is usable by the backend server to generate an ontology implementation, and wherein the ontology implementation is usable in execution of software applications that operate on data objects of the one or more data object types; and
automatically implementing the ontology SDK in the software development environment, wherein the ontology SDK is configured to provide functionality to the software development environment for developing software applications that operate on data objects of the one or more data object types.

2. The computerized method of claim 1, wherein executing the build process further includes:
generating a software application template package, wherein the application template package includes the ontology definition file, the ontology SDK, and one or more portions of software code defining a software application template, wherein the software application template package is usable for building a software application that operates on data objects of the one or more data object types.

3. The computerized method of claim 2 further comprising:
automatically communicating the software application template package to the backend server.

4. The computerized method of claim 3, wherein the software application template package is available from the backend server to a second user for building the software application.

5. The computerized method of any one of claims 1-4, further comprising:
receiving, via the interactive user interface and from the user, definitions of one or more object link types, wherein the object link types include respective one or more indications of associated data object types; and
executing the build process on the definitions of the one or more object link types to generate:
the ontology definition file; and
the ontology software development kit ("SDK");
wherein the ontology implementation is usable in execution of software applications that operate on object links of the one or more object link types and the ontology SDK is further configured to provide functionality to the software development environment for developing software applications that operate on object links of the one or more object link types,
wherein, optionally, the one or more indications are based on at least one of the respective one or more properties of the associated data object types,
and wherein, optionally, the one or more indications are between a first data object type and at least one second data object type, the first data object type being different from the at least one second data object type.

6. The computerized method of any one of claims 1-5, wherein the definitions are associated with a code binding configured to map a first development language associated with the software development environment with a second development language associated with the backend server.

7. The computerized method of any one of claims 1-6, wherein the software development environment is configured to analyze the definitions to confirm conformance with one or more object type rules.

8. The computerized method of any one of claims 1-7, further comprising:
receiving, via a second interactive user interface associated with the backend server and from the user, a data set associated with the data objects of the one or more data object types; and
developing, via the second interactive user interface, a software application by indexing the data set according to the definitions of the one or more data object types using the ontology definition file.

9. The computerized method of any one of claims 1-8, further comprising:
receiving, via the interactive user interface and from the user, a data set associated with the data objects of the one or more data object types; and
developing, via the interactive user interface, a software application by indexing the data set according to the definitions of the one or more data object types using the ontology SDK.

10. The computerized method of any one of claims 1-9, further comprising:
receiving, via the interactive user interface and from the user, definitions of one or more action types, wherein the action types include at least one of declarations or queries to the one or more properties of associated data object types; and
executing the build process on the definitions of the one or more action types to generate:
the ontology definition file; and
the ontology software development kit ("SDK");
wherein the ontology implementation is usable in execution of software applications that operate on actions of the one or more action types and the ontology SDK is further configured to provide functionality to the software development environment for developing software applications that operate on actions of the one or more action types.

11. The computerized method of any one of claims 1-10, wherein executing the build process includes:
parsing the definitions of the one or more data object types; and
generating an in-memory model from the parsed definitions of the one or more data object types.

12. The computerized method of any one of claims 1-11, wherein the definitions of one or more data object types are formatted to correspond to one or more data structures, the one or more data structures configured to store the data objects.

13. The computerized method of any one of claims 1-12, wherein the definitions of one or more data object types comprise a format of at least one of code, variables, or functions by which the user defines the one or more data object types and the associated one or more properties.

14. A system comprising:
one or more computer-readable storage mediums configured to store program instructions; and
one or more processors configured to execute the program instructions to cause the system to perform the computerized method of any of Claims 1-13.

15. One or more computer-readable storage mediums configured to store program instructions, the program instructions executable by one or more processors to cause the one or more processors to perform the computerized method of any of Claims 1-13.
